# EUROPEAN PATENT SPECIFICATION

(11) **EP 4 491 889 B1**
(45) Date of publication and mention of the grant of the patent: **03.12.2025**
(21) Application number: 24187527.7
(22) Date of filing: 09.07.2024
(51) Int. Cl.: F16B 13/08, F16B 37/12

(54) **BLIND FASTENING DEVICE FOR ATTACHING A PIECE TO A BASIC PIECE**
BLINDBEFESTIGUNGSVORRICHTUNG ZUR BEFESTIGUNG EINES TEILS AN EINEM BASISTEIL
DISPOSITIF DE FIXATION AVEUGLE POUR FIXER UNE PIÈCE À UNE PIÈCE DE BASE

(30) Priority: 12.07.2023 IT 202300003048 U
(43) Date of publication of application: 15.01.2025
(73) Proprietor: Specialinsert S.r.l., 10136 Torino (IT)
(72) Inventor: ARDUINI, PIERO, 10136 TORINO (IT)
(74) Representative: Garavelli, Paolo

(56) References cited:
- EP-A2- 0 819 806
- WO-A1-2016/162889
- KR-A- 20240 004 069

## Description

The present invention refers to a blind fastening device for fastening a piece to a base piece.

In general, the present invention refers to plugs or other devices fixed in walls or the like by inserting them into holes drilled there for this purpose with parts that cling into the hole or behind the back of the wall after insertion from the front, combined with an expansion sleeve by the use of an expander fixed by pulling out a separate part of the expander, operated by the screw, nail or the like.

From WO 2016/162889 A1 there is known a threaded insert with automatic fastening with respect to a slab of building material.

The state of the art is also represented by EP 0 819 806 A2 concerning a device for locking cladding sheets, on the anchoring means of the wall to be clad, comprising a connection member, for example a bolt, supported by its head on the bottom of a blind cylindrical hole made in the cladding slab, and held in this position by a pack of overlapping self-locking anti-slip elastic washers, whose fins bend and press against the wall of the blind hole, preventing the pack of washers from slipping out, the washers being arranged coaxially with respect to the connecting member and inserted onto it, and means being provided which allow the tabs of the washers to press against the wall of the blind hole without interfering with the tabs of the washer above and/or below.

The means that prevent interference between the fins consist of spacers.

To distribute the force that opposes the removal of the washers from the hole evenly along the wall of the blind cylindrical hole, the washers are arranged in the pack of washers that rests on the head of the bolt, in such a way that each washer is rotated by an angle prefixed with respect to the underlying washer, around the longitudinal axis of the bolt, the package of washers being completed by a washer inserted on the bolt at the top of the package itself, to prevent relative rotation between the washers when introducing the device into the cylindrical blind hole.

The device also includes: a cap of material equipped with a predetermined elasticity, applied coaxially around each connecting member with at least one part inserted with limited interference within the blind cylindrical hole in which each connecting member is placed, so as to prevent the penetration of water or water vapor into the hole itself; a fastening element, preferably a fastening nut screwed onto the threaded part (la) of each connecting member, so as to block the aforementioned cap.

The solution to the problem of maintaining contact between the fixed parts and avoiding the parts themselves slipping out is given by a blind fastening device for fixing a piece to a base piece via friction fit.

A friction fit occurs when two contact surfaces fit together in a way that creates a frictional resistance that prevents relative motion between them. In the context of the closing elements and connecting members, the mutual contact surfaces are shaped so as to obtain a friction fit.

The objective of this type of keying is to ensure that the closure element and the connecting member remain firmly connected without requiring the use of additional screws, bolts or other fasteners. Contact surfaces can be designed with complementary shapes, such as grooves and bumps, that fit together to create a frictional seal.

The friction generated between the contact surfaces helps keep the latch and connecting member stable, preventing them from loosening or separating under normal loads or stresses. This type of friction fit is often used in applications where quick and easy assembly is needed without the use of additional tools or hardware.

The above and other objects and advantages of the invention, as will appear from the following description, are achieved with a blind fastening device for fastening a piece to a base piece such as described in claim 1. Preferred embodiments and non-trivial variations of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by some preferred embodiments thereof, provided by way of example and not by way of limitation, with reference to the attached drawings, in which:
- FIG. 1 shows a sectional view of an operational mode embodiment of the blind fastening device for fastening a workpiece to a base workpiece according to the present invention;
- FIG. 2 shows an exploded view of an embodiment of the device of the previous figure;
- FIG. 3 shows an orthogonal projection view of a relevant element of the previous figure;
- FIG. 4 to 8 show a variation of FIG. 3; and
- FIG. 9 shows a plan view of a solution applied to a relevant component of the blind fastening device for fastening a piece to a base piece according to the present invention.

Referring to the Figures, it is possible to note that a blind fastening device for fixing at least one piece to a base piece BP comprises a connecting member 1 inserted into a hole in the base piece BP.

The connecting member 1 is connected to the base piece BP via elastically deformable means 2 which are mounted on the connecting member 1 via a closing element 3.

Advantageously, the mutual contact surfaces between the closing element 3 and the connecting member 1 are shaped so as to establish a friction fit.

The connecting member 1 is made up of a bush flanged on the part that abuts the bottom of the base piece BP.

The elastically deformable means 2 consist of at least one elastic washer inserted onto the connecting member 1.

The closing element 3 abutting against the elastically deformable means 2 is made up of a perforated cylindrical block inserted along the connecting member 1.

An external surface 11 of the connecting member 1 is suitably corrugated at least in the portion in contact with the internal surface of the perforated cylindrical block of the closing element 3.

The closing element 3 is made of nylon, plastic, or any other material.

The elastically deformable means 2 comprise at least one rigid spacer element 4.

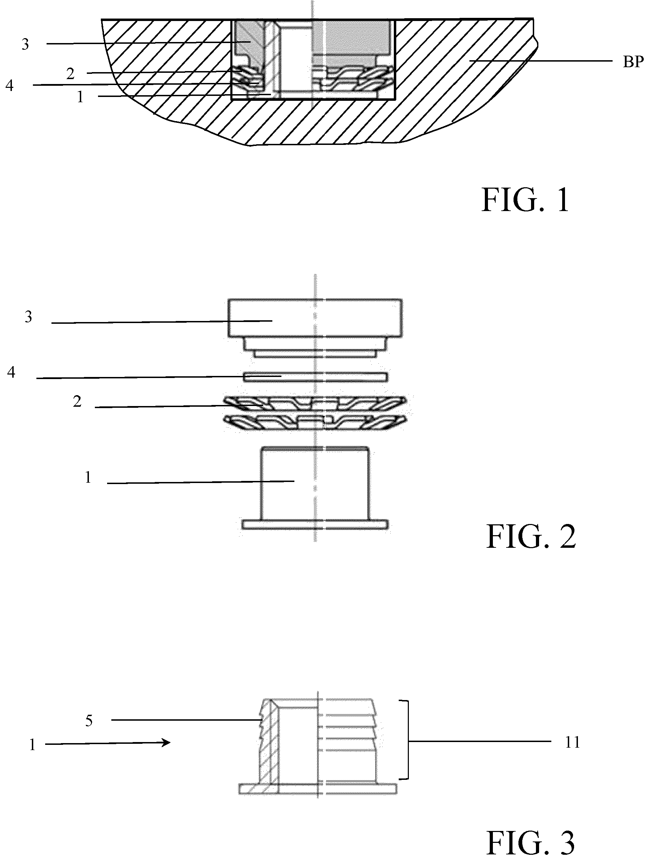

According to a preferred configuration, the external surface 11 is shaped with a sawtooth profile 5 (as can be seen, for example, in FIG. 3).

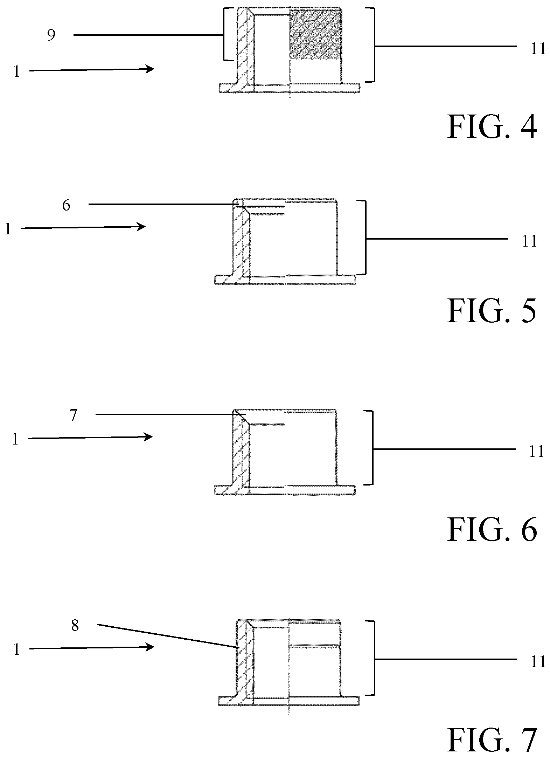

According to a further configuration, the external surface 11 is shaped with a knurling 9 (as can be seen, for example, in FIG. 4).

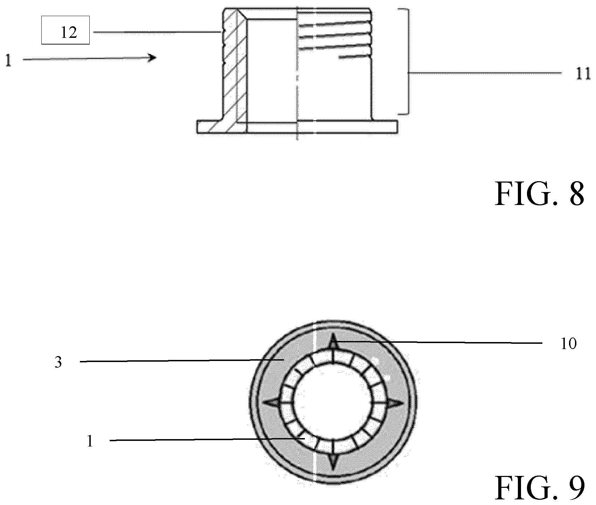

Furthermore, it is possible to combine the sawtooth and knurling configurations with one of the following solutions: the connecting member 1 shaped with a counterbore 6 or a countersinking 7 on the edge of the protruding part to allow the riveting process on the closing element 3 (as can be seen, for example, in FIG. 6); the connection member 1 comprising a seat 8 to allow the snap positioning of the closing element 3 (as can be seen, for example, in FIG. 7); the external surface 11 is shaped with a helical profile 12 (as can be seen, for example, in FIG. 8).

The edge of the closing element 3 can be provided with a series of swaging 10 arranged flush with the edge of the connecting member 1 (as can be seen, for example, in FIG. 9).

Some embodiments of the invention have been described, but obviously they are susceptible to further modifications and variations within the same inventive idea.

## Claims

1. Blind fastening device for fastening at least one piece to a base piece (BP), comprising a connecting member (1) inserted into a hole in the base piece (BP), said connecting member (1) being connected to the base piece (BP) via elastically deformable means (2), said elastically deformable means (2) being mounted on the connecting member (1) via a closing element (3), **characterized in that** the mutual contact surfaces between said closing element (3) and said connection member (1) are shaped so as to establish a friction fit.

2. Device according to the previous claim, **characterized in that** said connection member (1) is composed of a bush flanged on the part abutting the bottom of the base piece (BP), said elastically deformable means (2) being composed of at least one elastic washer inserted onto the connecting member (1), said closing element (3) abutting against said elastically deformable means (2) being a perforated cylindrical block inserted along the connecting member (1), an external surface (11) of said connecting member (1) being suitably corrugated at least in the portion in contact with the internal surface of the perforated cylindrical block of said closing element (3).

3. Device according to the previous claim, **characterized in that** the closing element (3) is made of nylon, plastic, or any other material.

4. Device according to one of the preceding claims, **characterized in that** said elastically deformable means (2) comprise at least one rigid spacer element (4).

5. Device according to one of the preceding claims, **characterized in that** said external surface (11) is shaped with a sawtooth profile (5).

6. Device according to one of claims 1 to 4, **characterized in that** said external surface (11) is shaped with a knurling (9).

7. Device according to one of the preceding claims, **characterized in that** the connecting member (1) is shaped with a counterbore (6) on the edge of the protruding part to allow riveting on the closing element (3).

8. Device according to one of claims 1 to 6, **characterized in that** the connecting member (1) is shaped with a countersinking (7) of the edge of the protruding part to allow riveting on the closing element (3).

9. Device according to one of the preceding claims, **characterized in that** the connecting member (1) includes a seat (8) to allow the snap positioning of the closing element (3).

10. Device according to one of claims 1 to 6, **characterized in that** said external surface (11) is shaped with a helical profile (12).

11. Device according to one of the preceding claims, **characterized in that** the edge of said closing element (3) is equipped with a series of swaging (10) arranged flush with the edge of the connecting member (1).

## Patentansprüche

1. Blindbefestigungsvorrichtung zum Befestigen mindestens eines Werkstücks an einem Basisstück (BP), umfassend ein Verbindungselement (1), das in ein Loch im Basisstück (BP) eingesetzt ist, wobei das Verbindungselement (1) mittels elastisch verformbarer Mittel (2) mit dem Basisstück (BP) verbunden ist, wobei die elastisch verformbaren Mittel (2) mittels eines Schließelements (3) am Verbindungselement (1) angebracht sind, **dadurch gekennzeichnet, dass** die gegenseitigen Kontaktflächen zwischen dem Schließelement (3) und dem Verbindungselement (1) so geformt sind, dass ein Reibschluss entsteht.

2. Vorrichtung nach dem vorhergehenden Anspruch, **dadurch gekennzeichnet, dass** das Verbindungselement (1) aus einer Flanschbuchse an dem Teil besteht, der an der Unterseite des Basisstücks (BP) anliegt, wobei die elastisch verformbaren Mittel (2) aus mindestens einer elastischen Unterlegscheibe bestehen, die auf dem Verbindungselement (1) eingesetzt ist, wobei das Verschlusselement (3), das an den elastisch verformbaren Mitteln (2) anliegt, ein perforierter zylindrischer Block ist, der entlang des Verbindungselements (1) eingesetzt ist, wobei eine Außenfläche (11) des Verbindungselements (1) zumindest in dem Abschnitt, der mit der Innenfläche des perforierten zylindrischen Blocks des Verschlusselements (3) in Kontakt steht, entsprechend geriffelt ist.

3. Vorrichtung nach dem vorhergehenden Anspruch, **dadurch gekennzeichnet, dass** das Verschlusselement (3) aus Nylon, Kunststoff oder einem anderen Material besteht.

4. Vorrichtung nach einem der vorhergehenden Ansprüche, **dadurch gekennzeichnet, dass** die elastisch verformbaren Mittel (2) mindestens ein starres Abstandselement (4) umfassen.

5. Vorrichtung nach einem der vorhergehenden Ansprüche, **dadurch gekennzeichnet, dass** die Außenfläche (11) ein Sägezahnprofil (5) aufweist.

6. Vorrichtung nach einem der Ansprüche 1 bis 4, **dadurch gekennzeichnet, dass** die Außenfläche (11) mit einer Rändelung (9) versehen ist.

7. Vorrichtung nach einem der vorhergehenden Ansprüche, **dadurch gekennzeichnet, dass** das Verbindungselement (1) an der Kante des hervorstehenden Teils mit einer Verblendung (6) versehen ist, um den Nietvorgang am Verschlusselement (3) zu ermöglichen.

8. Vorrichtung nach einem der Ansprüche 1 bis 6, **dadurch gekennzeichnet, dass** das Verbindungselement (1) mit einer Aufweitung (7) der Kante des hervorstehenden Teils geformt ist, um den Nietvorgang am Verschlusselement (3) zu ermöglichen.

9. Vorrichtung nach einem der vorhergehenden Ansprüche, **dadurch gekennzeichnet, dass** das Verbindungselement (1) eine Aufnahme (8) zur Einrastpositionierung des Verschlusselements (3) aufweist.

10. Vorrichtung nach einem der Ansprüche 1 bis 6, **dadurch gekennzeichnet, dass** die Außenfläche (11) ein schraubenförmiges Profil (12) aufweist.

11. Vorrichtung nach einem der vorhergehenden Ansprüche, **dadurch gekennzeichnet, dass** der Rand des Verschlusselements (3) mit einer Reihe von Kerben (10) versehen ist, die bündig mit dem Rand des Verbindungselements (1) angeordnet sind.

## Revendications

1. Dispositif de fixation aveugle pour la fixation d'au moins une pièce à une base (BP), comprenant un élément de liaison (1) inséré dans un trou de la base (BP), ledit élément de liaison (1) étant relié à la base (BP) par un moyen élastiquement déformable (2), ledit moyen élastiquement déformable (2) étant monté sur l'élément de liaison (1) par un élément de fermeture (3), **caractérisé en ce que** les surfaces de contact mutuelles entre ledit élément de fermeture (3) et ledit élément de liaison (1) sont conformées de manière à établir un ajustement par frottement.

2. Dispositif selon la revendication précédente, **caractérisé en ce que** ledit élément de liaison (1) est constitué d'une douille à collerette sur la partie venant en butée contre le fond de la pièce de base (BP), ledit moyen élastiquement déformable (2) étant constitué d'au moins une rondelle élastique insérée sur l'élément de liaison (1), ledit élément de fermeture (3) venant en butée contre ledit moyen élastiquement déformable (2) étant un bloc cylindrique perforé inséré le long de l'élément de liaison (1), la surface externe (11) dudit élément de liaison (1) étant convenablement ondulée au moins dans la partie en contact avec la surface interne du bloc cylindrique perforé dudit élément de fermeture (3).

3. Dispositif selon la revendication précédente, **caractérisé en ce que** l'élément de fermeture (3) est réalisé en nylon, en plastique ou en tout autre matériau.

4. Dispositif selon l'une des revendications précédentes, **caractérisé en ce que** lesdits moyens élastiquement déformables (2) comprennent au moins un élément d'espacement rigide (4).

5. Dispositif selon l'une des revendications précédentes, **caractérisé en ce que** ladite surface externe (11) est conformée avec un profil en dents de scie (5).

6. Dispositif selon l'une des revendications 1 à 4, **caractérisé en ce que** ladite surface externe (11) est conformée avec un moletage (9).

7. Dispositif selon l'une des revendications précédentes, **caractérisé en ce que** l'élément de liaison (1) est conformé avec un parement (6) sur le bord de la partie en saillie pour permettre le processus de rivetage sur l'élément de fermeture (3).

8. Dispositif selon l'une des revendications 1 à 6, **caractérisé en ce que** l'élément de liaison (1) est conformé avec un évasement (7) du bord de la partie en saillie pour permettre le processus de rivetage sur l'élément de fermeture (3).

9. Dispositif selon l'une des revendications précédentes, **caractérisé en ce que** l'organe de liaison (1) comporte un siège (8) pour permettre le positionnement par encliquetage de l'élément de fermeture (3).

10. Dispositif selon l'une des revendications 1 à 6, **caractérisé en ce que** ladite surface externe (11) est conformée avec un profil hélicoïdal (12).

11. Dispositif selon l'une des revendications précédentes, **caractérisé en ce que** le bord dudit élément de fermeture (3) est pourvu d'une série d'encoches (10) disposées au ras du bord de l'organe de liaison (1).
